# EUROPÄISCHE PATENTSCHRIFT

(11) **EP 3 380 981 B1**
(45) Veröffentlichungstag und Bekanntmachung des Hinweises auf die Patenterteilung: **12.01.2022**
(21) Anmeldenummer: 16798115.8
(22) Anmeldetag: 11.11.2016
(51) Int. Cl.: G06F 9/448, G06F 9/445, G06F 21/57, G06F 21/62

(54) **SICHERHEITSSTEUERUNGSEINRICHTUNG UND VERFAHREN ZUR ÄNDERUNG EINES FUNKTIONSUMFANGS EINER SICHERHEITSSTEUERUNGSEINRICHTUNG**
SAFETY CONTROL DEVICE AND METHOD FOR CHANGING A RANGE OF FUNCTIONS OF A SAFETY CONTROL DEVICE
DISPOSITIF DE COMMANDE DE SÉCURITÉ ET PROCÉDÉ POUR MODIFIER LE RÉPERTOIRE DES FONCTIONS D'UN DISPOSITIF DE COMMANDE DE SÉCURITÉ

(30) Priorität: 24.11.2015 DE 102015120347
(43) Veröffentlichungstag der Anmeldung: 03.10.2018
(73) Patentinhaber: Pilz GmbH & Co. KG, 73760 Ostfildern (DE)
(72) Erfinder: BAUKNECHT, Jochen, 73760 Ostfildern (DE); BRUCHERTSEIFER, Jörg, 73760 Ostfildern (DE); RICK, Károly, 73760 Ostfildern (DE); WÖHNER, Marcel, 73760 Ostfildern (DE)
(74) Vertreter: Manske, Jörg
(86) Internationale Anmeldenummer: PCT/EP2016/077456
(87) Internationale Veröffentlichungsnummer: WO 2017/089150

(56) Entgegenhaltungen:
- EP-A1- 1 686 775

## Beschreibung

Die vorliegende Erfindung betrifft eine Sicherheitssteuerungseinrichtung, umfassend mindestens ein Eingabemodul mit einer Anzahl von Eingangsschnittstellen, mindestens ein Ausgabemodul mit einer Anzahl von Ausgangsschnittstellen sowie eine Recheneinheit, die an das mindestens eine Eingabemodul und an das mindestens eine Ausgabemodul angeschlossen ist und einen programmierbaren Prozessor und einen Festspeicher aufweist, wobei in dem Festspeicher ein Betriebsprogramm für den Prozessor mit Programmcodemitteln in maschinenlesbarer Form zur Bereitstellung einer Funktionsbibliothek mit einer Anzahl n von Funktionen der Sicherheitssteuerungseinrichtung nicht-flüchtig gespeichert ist. Darüber hinaus betrifft die vorliegende Erfindung ein Verfahren zur Änderung eines Funktionsumfangs einer Sicherheitssteuerungseinrichtung.

Steuerungseinrichtungen sind aus dem Stand der Technik in unterschiedlichen Ausführungsformen bekannt. Diese Steuerungseinrichtungen unterscheiden sich insbesondere durch die darin implementierten Funktionsumfänge voneinander. Zu unterscheiden ist hier insbesondere zwischen speicherprogrammierbaren Steuerungseinrichtungen gemäß der europäischen Norm EN 61131 sowie Sicherheitssteuerungseinrichtungen gemäß der internationalen Norm IEC 61508, die zusätzliche Sicherheitsfunktionen ausführen können und somit auch in sicherheitskritischen Bereichen zur Steuerung sicherheitskritischer Prozesse eingesetzt werden können.

Eine herkömmliche speicherprogrammierbare Steuerungseinrichtung umfasst ein Eingangsmodul mit einer Anzahl von Eingangsschnittstellen, eine Recheneinheit sowie ein Ausgangsmodul mit einer Anzahl von Ausgangsschnittstellen. An die Eingangsschnittstellen können in bekannter Weise Sensoren angeschlossen werden, die zum Beispiel Informationen über einen Betriebsstatus einer Maschine oder einer Maschinenanlage liefern können und diese als Eingangssignale der Steuerungseinrichtung zur Verfügung stellen können. Diese Eingangssignale werden mit Hilfe der Recheneinheit ausgewertet, wobei durch logische Verknüpfungen und gegebenenfalls weitere Signal- und Datenverarbeitungsschritte Ausgangssignale generiert werden, die über die Ausgangsschnittstellen des Ausgabemoduls ausgegeben werden. An die Ausgangsschnittstellen des Ausgabemoduls sind Aktoren angeschlossen, die die Ausgangssignale verarbeiten können und daraufhin bestimmte Aktionen ausführen können.

Eine Sicherheitssteuerungseinrichtung, die zum Beispiel aus der WO 98/44399 A1 bekannt ist und die zusätzliche Sicherheitsfunktionen zur Verfügung stellt, ist dazu in der Lage, stets einen sicheren Zustand des gesteuerten Prozesses, wie zum Beispiel einer Maschine oder einer Maschinenanlage, sicherzustellen. In diesem Zusammenhang werden sehr hohe Anforderungen an die eigene Fehlersicherheit der Sicherheitssteuerungseinrichtung gestellt. Dementsprechend ist es erforderlich, dass Sicherheitssteuerungseinrichtungen vor dem ersten Inverkehrbringen umfangreichen und aufwändigen Tests unterzogen werden, um eine entsprechende Zulassung durch die zuständigen Behörden zu erhalten.

Speicherprogrammierbare Steuerungseinrichtungen sowie Sicherheitssteuerungseinrichtungen können in bekannter Weise mit Hilfe eines Anwenderprogramms konfiguriert werden und dadurch an die entsprechenden Betriebsanforderungen eines Anwenders angepasst werden. In einem vom Anwenderprogramm getrennten Betriebsprogramm sind unterschiedliche Funktionen (Basisfunktionen) der Steuerungseinrichtung beziehungsweise der Sicherheitssteuerungseinrichtung gespeichert. Durch diese Funktionen wird der grundlegende Funktionsumfang der speicherprogrammierbaren Steuerungseinrichtungen beziehungsweise der Sicherheitssteuerungseinrichtungen definiert.

Da die in dem Betriebsprogramm gespeicherten Funktionen häufig sicherheitskritisch sind, werden in der Regel technische Maßnahmen ergriffen, die eine Veränderung des Betriebsprogramms beziehungsweise einen Austausch des Betriebsprogramms durch ein anderes Betriebsprogramm seitens des Anwenders wirksam verhindern. Dementsprechend ist ein Zugriff auf das Betriebsprogramm für den Anwender durch entsprechende Sicherungsmaßnahmen gesperrt. Dieses ist insbesondere bei Sicherheitssteuerungseinrichtungen sehr wichtig, da sich die Zertifizierung durch die zuständigen Behörden nur auf eine Kombination aus dem Betriebsprogramm mit der zugehörigen Hardware der Sicherheitssteuerungseinrichtung bezieht. Durch das Aufspielen eines neuen Betriebsprogramms seitens des Anwenders kann die Fehlersicherheit der Sicherheitssteuerungseinrichtung vom Hersteller nicht mehr in zuverlässiger Weise sichergestellt werden.

Wenn der Funktionsumfang einer Steuerungseinrichtung, insbesondere einer Sicherheitssteuerungseinrichtung, nachträglich verändert werden soll, muss der Austausch des Betriebsprogramms in der Regel vom Hersteller der Steuerungseinrichtung beziehungsweise Sicherheitssteuerungseinrichtung vorgenommen werden. Dabei muss der Anwender die Steuerungseinrichtung beziehungsweise Sicherheitssteuerungseinrichtung sowie die daran angeschlossene Maschine beziehungsweise Maschinenanlage außer Betrieb setzen und die Steuerungseinrichtung beziehungsweise Sicherheitssteuerungseinrichtung an den Hersteller senden oder den Austausch des Betriebsprogramms von einem zugelassenen Servicetechniker vornehmen lassen. Dieses ist häufig mit längeren Stillstandzeiten der an die Steuerungseinrichtung beziehungsweise Sicherheitssteuerungseinrichtung angeschlossenen Maschine beziehungsweise Maschinenanlage verbunden, die sich negativ auf die Produktivität und Wirtschaftlichkeit auswirken. Zudem kann es sich herausstellen, dass die Steuerungseinrichtung beziehungsweise Sicherheitssteuerungseinrichtung von vornherein nicht für bestimmte, vom Anwender gewünschte Funktionsumfänge ausgelegt ist, so dass für die Nutzung des geänderten Betriebsprogramms eine neue Hardware der Steuerungseinrichtung beziehungsweise Sicherheitssteuerungseinrichtung beschafft werden muss.

Aus der deutschen Patentanmeldung DE 102 40 584 A1, die auf die Anmelderin zurückgeht, sind eine Sicherheitssteuerungseinrichtung sowie ein Verfahren zum Aufspielen eines neuen Betriebsprogramms auf eine solche bekannt. Dabei wird der bis dahin bestehende Grundsatz durchbrochen, dass ein Aufspielen eines neuen Betriebsprogramms einer Sicherheitssteuerungseinrichtung nicht vom Anwender selbst vorgenommen werden darf. Dieses Verfahren beinhaltet entsprechende Maßnahmen, mittels derer sichergestellt werden kann, dass die Sicherheitssteuerungseinrichtung auch nach dem Aufspielen eines neuen Betriebsprogramms weiterhin fehlersicher arbeitet. Das Ersetzen eines Betriebsprogramms durch ein neues Betriebsprogramm kann unter Umständen zu Problemen führen, wenn zum Beispiel während des Update-Prozesses die Stromversorgung der Steuerungseinrichtung unerwartet unterbrochen wird und das neue Betriebsprogramm nicht beziehungsweise nicht vollständig aufgespielt wurde. In einem solchen Fall ist die Steuerungseinrichtung in der Regel nicht mehr ohne weiteres funktionsfähig, so dass hier häufig die Unterstützung des Herstellers erforderlich ist, um die Funktionsfähigkeit der Steuerungseinrichtung wiederherzustellen.

Die EP 1 686 775 A1 offenbart ein System und ein Verfahren zur Lizensierung von Funktionalitäten in Telekommunikationsendgeräten. Mit Hilfe von Freischaltcodes können bestimmte Funktionen der Telekommunikationsendgeräte freigeschaltet werden. Bei diesen Telekommunikationsendgeräten handelt es sich nicht um Sicherheitssteuerungseinrichtungen gemäß der vorliegenden Erfindung, die so ausgebildet sind, dass sie sicherheitskritische Prozesse steuern können.

Die Erfindung macht es sich daher zur Aufgabe, eine Sicherheitssteuerungseinrichtung der eingangs genannten Art und ein Verfahren zur Änderung eines Funktionsumfangs einer Sicherheitssteuerungseinrichtung zur Verfügung zu stellen, bei denen eine Änderung des Funktionsumfangs der Sicherheitssteuerungseinrichtung auf alternativem Wege einfach und prozesssicher vorgenommen werden kann.

Die Lösung dieser Aufgabe liefern eine Sicherheitssteuerungseinrichtung der eingangs genannten Art mit den Merkmalen des kennzeichnenden Teils des Anspruchs 1 sowie ein Verfahren mit den Merkmalen des Anspruchs 7. Die Unteransprüche betreffen vorteilhafte Weiterbildungen der Erfindung.

Eine erfindungsgemäße Sicherheitssteuerungseinrichtung zeichnet sich dadurch aus, dass die Sicherheitssteuerungseinrichtung ein nicht-flüchtiges, überschreibbares Speichermittel aufweist, das in einer Speichermittelschnittstelle der Recheneinheit austauschbar aufgenommen ist, wobei in dem Speichermittel eine Anzahl von Funktionsaktivierungscodes abrufbar gespeichert ist und jedem der Funktionsaktivierungscodes eine Funktion der Funktionsbibliothek derart zuordenbar ist, dass durch eine logische Verknüpfung der Funktionsaktivierungscodes mit den diesen zugeordneten Funktionen der Funktionsbibliothek nur diejenigen Funktionen der Funktionsbibliothek aktivierbar sind, deren Funktionsaktivierungscodes in dem Speichermittel gespeichert sind, wobei die Funktionsbibliothek eine erste Funktionsgruppe aufweist, die der Sicherheitssteuerungseinrichtung nach der Aktivierung durch die zugeordneten Funktionsaktivierungscodes in einer ersten Basiskonfiguration Funktionsumfänge für eine signalverarbeitungsfreie Signaleingabe und Signalausgabe zur Verfügung stellt, und/oder dass die Funktionsbibliothek eine zweite Funktionsgruppe aufweist, die der Sicherheitssteuerungseinrichtung nach der Aktivierung durch die zugeordneten Funktionsaktivierungscodes in einer zweiten Basiskonfiguration Funktionsumfänge einer speicherprogrammierbaren Steuerungseinrichtung zur Verfügung stellt, und dass die Funktionsbibliothek eine dritte Funktionsgruppe aufweist, die der Sicherheitssteuerungseinrichtung nach der Aktivierung durch die zugeordneten Funktionsaktivierungscodes in einer dritten Basiskonfiguration Funktionsumfänge einer Sicherheitssteuerungseinrichtung mit sicherheitstechnischen Steuerregeln zur Verfügung stellt. Die erfindungsgemäße Sicherheitssteuerungseinrichtung ermöglicht eine einfache (auch nachträgliche) Funktionserweiterung beziehungsweise Funktionsänderung durch den Anwender, indem durch die logische Verknüpfung der in dem nicht-flüchtigen Speichermittel gespeicherten Funktionsaktivierungscodes mit den Funktionen der Funktionsbibliothek des Betriebsprogramms nur diejenigen Funktionen aktiviert und dadurch freigeschaltet werden, die der Anwender tatsächlich benötigt beziehungsweise für die er vom Hersteller der Sicherheitssteuerungseinrichtung entsprechende Nutzungsrechte erworben hat. Die Sicherheitssteuerungseinrichtung ist somit skalierbar und kann auf einfache Weise prozesssicher um zusätzliche Funktionen erweitert werden, indem das in der Speichermittelschnittstelle austauschbar untergebrachte überschreibbare Speichermittel, das vorzugsweise eine SD-Karte oder ein USB-Speichermittel sein kann, mit entsprechenden Funktionsaktivierungscodes beschrieben wird, die anschließend mit den diesen zugeordneten Funktionen der Funktionsbibliothek logisch verknüpft werden, so dass diese Funktionen freigeschaltet und aktiviert werden. Vorzugsweise kann durch die Nutzung von Speichermitteln mit kryptografischen Speicherbereichen, in denen die Funktionsaktivierungscodes gespeichert sind, ein Kopier- und Manipulationsschutz erhalten werden. Ein Aufspielen eines geänderten Betriebsprogramms zur Änderung des Funktionsumfangs der Sicherheitssteuerungseinrichtung, das während des Upgrade-Prozesses zu unerwarteten Fehlern führen kann, kann somit in vorteilhafter Weise vermieden werden. Für den Hersteller der Sicherheitssteuerungseinrichtung ergeben sich ebenfalls Vorteile. So ist es nicht erforderlich, für unterschiedliche Funktionsumfänge der Sicherheitssteuerungseinrichtung unterschiedliche Betriebsprogramme zu erstellen, aufwändig zu testen und gegebenenfalls zusammen mit der Hardware zertifizieren zu lassen. Anwenderseitig können einzelne der aktivierten und freigeschalteten Funktionen oder auch Funktionsgruppen mit einer Mehrzahl von Funktionen selektiv mit einem Anwenderprogramm ausgewählt, parametrisiert und in geeigneter Weise miteinander verknüpft werden. Zu diesem Zweck kann eine Programmierschnittstelle oder eine an die Sicherheitssteuerungseinrichtung anschließbare Programmiervorrichtung vorgesehen sein.

Erfindungsgemäß ist vorgesehen, dass die Funktionsbibliothek eine erste Funktionsgruppe aufweist, die der Sicherheitssteuerungseinrichtung nach der Aktivierung durch die zugeordneten Funktionsaktivierungscodes in einer ersten Basiskonfiguration Funktionsumfänge für eine signalverarbeitungsfreie Signaleingabe und Signalausgabe zur Verfügung stellt. Diese erste Basiskonfiguration der Sicherheitssteuerungseinrichtung, die der Anwender vorkonfiguriert vom Hersteller der Sicherheitssteuerungseinrichtung erwerben kann, bildet die "einfachste" Ausgestaltung der Steuerungsvorrichtung, die lediglich eine Signaleingabe und eine Signalausgabe ermöglicht.

Zusätzlich oder alternativ weist die Funktionsbibliothek eine zweite Funktionsgruppe auf, die der Sicherheitssteuerungseinrichtung nach der Aktivierung durch die zugeordneten Funktionsaktivierungscodes in einer zweiten Basiskonfiguration Funktionsumfänge einer speicherprogrammierbaren Steuerungseinrichtung zur Verfügung stellt. Diese zweite Basiskonfiguration kann ebenfalls vom Hersteller der Sicherheitssteuerungseinrichtung vorkonfiguriert sein. Ferner kann ein Anwender, der die Sicherheitssteuerungseinrichtung mit der ersten Basiskonfiguration bereits besitzt, durch einen Erwerb von Nutzungsrechten für die Funktionen der zweiten Funktionsgruppe und das Verknüpfen der Funktionsaktivierungscodes mit den diesen zugeordneten Funktionen der Funktionsbibliothek in der oben beschriebenen Weise seine Sicherheitssteuerungseinrichtung in eine höhere Geräteklasse überführen, in der Funktionsumfänge einer speicherprogrammierbaren Steuerungseinrichtung gemäß der Norm EN 61131 bereitgestellt werden. Ein kostspieliger Austausch der Hardware der Sicherheitssteuerungseinrichtung oder das Aufspielen eines komplett neuen Betriebsprogramms sind somit nicht erforderlich.

Ferner weist die Funktionsbibliothek eine dritte Funktionsgruppe auf, die der Sicherheitssteuerungseinrichtung nach der Aktivierung durch die zugeordneten Funktionsaktivierungscodes in einer dritten Basiskonfiguration Funktionsumfänge einer Sicherheitssteuerungseinrichtung mit sicherheitstechnischen Steuerregeln zur Verfügung stellt. Beispiel für freischaltbare Sicherheitsfunktionen sind unter anderem sichere Kommunikationsprotokolle sowie so genannte "Failsafe"-Funktionen. Diese dritte Basiskonfiguration kann ebenfalls vom Hersteller der Sicherheitssteuerungseinrichtung vorkonfiguriert sein. Ferner kann ein Anwender, der die Sicherheitssteuerungseinrichtung in der ersten oder zweiten Basiskonfiguration bereits besitzt, durch einen Erwerb von Nutzungsrechten für die Funktionen der dritten Funktionsgruppe und das Verknüpfen der Aktivierungscodes mit den diesen zugeordneten Funktionen der Funktionsbibliothek in der oben beschriebenen Weise seine Sicherheitssteuerungseinrichtung in eine höhere Geräteklasse überführen, in der Funktionsumfänge einer Sicherheitssteuerungseinrichtung gemäß der Norm IEC 61508 mit entsprechenden sicherheitstechnischen Steuerregeln bereitgestellt werden. Ein kostspieliger Austausch der Hardware der Sicherheitssteuerungseinrichtung oder das Aufspielen eines komplett neuen Betriebsprogramms sind somit ebenfalls nicht erforderlich. Die mit den zusätzlichen Sicherheitsfunktionen ausgestattete Sicherheitssteuerungseinrichtung ist zum fehlersicheren Steuern sicherheitskritischer Prozesse, wie zum Beispiel einer fehlersicheren Abschaltung einer Maschine oder einer Maschinenanlage, eingerichtet. Ferner können Funktionen aus der Funktionsbibliothek freigeschaltet und aktiviert werden, die zu einer Erhöhung der Eigensicherheit der Sicherheitssteuerungseinrichtung beitragen.

In einer besonders bevorzugten Ausführungsform kann vorgesehen sein, dass die Funktionsumfänge der ersten und/oder zweiten und/oder dritten Basiskonfiguration durch Überschreiben des Speichermittels und Speichern zumindest teilweise von den Basiskonfigurationen verschiedener Funktionsaktivierungscodes veränderbar, insbesondere erweiterbar, sind. Die Idee besteht somit nicht nur darin, durch den Erwerb von Nutzungsrechten an einer ganzen Funktionsgruppe die Sicherheitssteuerungseinrichtung in eine andere Geräteklasse zu überführen, sondern auch innerhalb der drei verschiedenen Basiskonfigurationen Änderungen der Funktionsumfänge der Sicherheitssteuerungseinrichtung vornehmen zu können. Das Freischalten erfolgt durch Verknüpfung der Funktionsaktivierungscodes mit den Funktionen der Funktionsbibliothek in der oben beschriebenen Weise.

Um insbesondere bei einem austauschbaren Speichermittel zu verhindern, dass die Funktionsaktivierungscodes unautorisiert kopiert werden oder dass das Speichermittel in einer anderen Sicherheitssteuerungseinrichtung als derjenigen, für die die Nutzungsrechte erworben wurden, verwendet wird, kann in einer bevorzugten Ausführungsform vorgesehen sein, dass in dem nicht-flüchtigen, überschreibbaren Speichermittel zumindest ein Hardwareidentifikationsdatensatz abrufbar gespeichert ist, der dazu eingerichtet ist, das Speichermittel und die mittels der Funktionsaktivierungscodes freigeschalteten Funktionen eindeutig mit der Hardware der Sicherheitssteuerungseinrichtung zu verknüpfen. Die Sicherheitssteuerungseinrichtung kann nur zusammen mit dem autorisierten Speichermittel verwendet werden.

In einer weiteren vorteilhaften Ausführungsform besteht die Möglichkeit, dass die Funktionsaktivierungscodes in einem kryptografisch geschützten Speicherbereich des Speichermittels gespeichert sind. Dadurch kann bei einem austauschbaren Speichermittel verhindert werden, dass die Funktionsaktivierungscodes unautorisiert kopiert oder manipuliert werden. Bei einem fest in die Recheneinheit integrierten Speichermittel kann durch diese Maßnahme eine Manipulation der Funktionsaktivierungscodes verhindert werden.

Vorzugsweise können die Funktionen der Funktionsbibliothek in einer Funktionstabelle innerhalb des Festspeichers abrufbar gespeichert sein. Dadurch kann die Verknüpfung der Funktionsaktivierungscodes mit den Funktionen der Funktionsbibliothek in besonders einfacher Weise erfolgen. Ferner kann sehr einfach erkannt werden, ob es zu einem oder mehreren Funktionsaktivierungscodes möglicherweise keine "passenden", diesen zuordenbaren Funktionen in der Funktionsbibliothek gibt.

In einer besonders vorteilhaften Weiterbildung besteht die Möglichkeit, dass die Sicherheitssteuerungseinrichtung um ein oder mehrere Eingabemodule und/oder um ein oder mehrere Ausgabemodule erweiterbar ist, wobei zusätzliche Funktionen des Eingabemoduls/der Eingabemodule und/oder des Ausgabemoduls/der Ausgabemodule in der Funktionsbibliothek des Betriebsprogramms enthalten sind. Dadurch wird in vorteilhafter Weise auch eine Hardware-Skalierung der Sicherheitssteuerungseinrichtung geschaffen. Da die Funktionen der zusätzlichen Eingabemodule und/oder Ausgabemodule bereits in die Funktionsbibliothek des Betriebsprogramms integriert sind und in der hier beschriebenen Weise aktiviert und dadurch freigeschaltet werden können, ist es in vorteilhafter Weise nicht erforderlich, bei einer Hardwareerweiterung ein ganz neues Betriebsprogramm in der Sicherheitssteuerungseinrichtung zu installieren.

Ein erfindungsgemäßes Verfahren zur Änderung eines Funktionsumfangs einer Sicherheitssteuerungseinrichtung nach einem der Ansprüche 1 bis 6 umfasst die Schritte
- Bereitstellen der Sicherheitssteuerungseinrichtung mit einem Betriebsprogramm,
- Bereitstellen eines überschreibbaren, nicht-flüchtigen Speichermittels, in dem Funktionsaktivierungscodes der ersten Funktionsgruppe und/oder der zweiten Funktionsgruppe und der dritten Funktionsgruppe abrufbar gespeichert sind,
- Verknüpfen der gespeicherten Funktionsaktivierungscodes mit diesen zugeordneten Funktionen einer Funktionsbibliothek des Betriebsprogramms in der Sicherheitssteuerungseinrichtung.

Das erfindungsgemäße Verfahren ermöglicht auf einfache Weise eine Anpassung beziehungsweise Erweiterung des Funktionsumfangs einer vorhandenen Sicherheitssteuerungseinrichtung, ohne dass dabei das Betriebsprogramm durch ein geändertes Betriebsprogramm ersetzt werden muss. Dieses wirkt sich vorteilhaft auf die Prozesssicherheit bei der Anpassung beziehungsweise Erweiterung des Funktionsumfangs der Sicherheitssteuerungseinrichtung aus.

In einer vorteilhaften Ausgestaltung wird vorgeschlagen, dass nach dem Verknüpfen der gespeicherten Funktionsaktivierungscodes mit den Funktionen der Funktionsbibliothek zumindest ein Hardwareidentifikationsdatensatz in dem nicht-flüchtigen Speichermittel abrufbar gespeichert wird. Dadurch können insbesondere ein unautorisiertes Kopieren der Funktionsaktivierungscodes beziehungsweise eine unautorisierte Nutzung der freigeschalteten Funktionsumfänge in einer anderen Sicherheitssteuerungseinrichtung verhindert werden.

In einer besonders vorteilhaften Ausführungsform besteht die Möglichkeit, dass die Funktionsaktivierungscodes in einem kryptografisch geschützten Speicherbereich des Speichermittels gespeichert werden. Auf diese Weise kann das Kopieren und Manipulieren der Funktionsaktivierungscodes wirksam verhindert werden. Bei einem austauschbaren Speichermittel, wie zum Beispiel einer SD-Karte oder einem USB-Speichermittel, besteht so in vorteilhafter Weise die Möglichkeit, die einmal erworbenen Funktionsaktivierungscodes später mit anderen dafür vorgesehenen Sicherheitssteuerungseinrichtungen zu nutzen. Dieses ist zum Beispiel bei einem Defekt der Sicherheitssteuerungseinrichtung vorteilhaft, da eine weitere funktionsfähige Sicherheitssteuerungseinrichtung sehr einfach durch Einsetzen des Speichermittels in eine dafür vorgesehene Speichermittelaufnahme betriebsbereit gemacht werden kann.

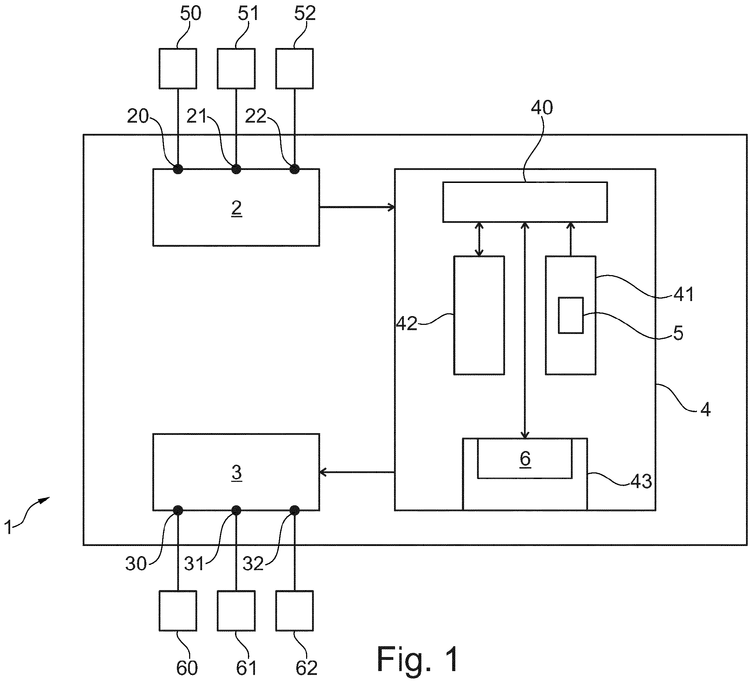

Weitere Merkmale und Vorteile der vorliegenden Erfindung werden deutlich anhand der nachfolgenden Beschreibung eines bevorzugten Ausführungsbeispiels unter Bezugnahme auf die beiliegende Fig. 1, die eine schematisch stark vereinfachte Darstellung einer Sicherheitssteuerungseinrichtung 1 zeigt.

Die Sicherheitssteuerungseinrichtung 1 umfasst in diesem Ausführungsbeispiel mindestens ein Eingabemodul 2, mindestens ein Ausgabemodul 3 sowie eine Recheneinheit 4, die an das Eingabemodul 2 und an das Ausgabemodul 3 angeschlossen ist. Das Eingabemodul 2 weist eine Anzahl von Eingangsschnittstellen 20, 21, 22 auf, die selektiv aktivierbar oder deaktivierbar sind. Dadurch können einzelne oder alle Eingangsschnittstellen 20, 21, 22 anwendungsspezifisch aktiviert werden, so dass diese Eingangssignale empfangen können. An jede der Eingangsschnittstellen 20, 21, 22 kann ein Sensor 50, 51, 52 angeschlossen werden. Jeder dieser Sensoren 50, 51, 52 kann den Eingangsschnittstellen 20, 21, 22 Eingangssignale zur Verfügung stellen, die zum Beispiel Informationen über einen Betriebsstatus einer Maschine oder einer Maschinenanlage liefern können. Beispiele für derartige Sensoren 50, 51, 52 sind unter anderem Taster, Schalter, Annäherungssensoren, Temperatursensoren, Lagesensoren, Drehzahlzensoren, Drucksensoren und Lichtschranken.

Die Sicherheitssteuerungseinrichtung 1 ist grundsätzlich dafür ausgelegt, dass die über die Eingangsschnittstellen 20, 21, 22 erhaltenen Eingangssignale von der Recheneinheit 4, deren Aufbau und Funktionsweise weiter unten näher beschrieben werden, verarbeitet werden können. Das Ausgabemodul 3 weist eine Anzahl von Ausgangsschnittstellen 30, 31, 32 auf, die ebenfalls selektiv aktiviert beziehungsweise deaktiviert werden können. Dadurch können einzelne oder alle Ausgangsschnittstellen 30, 31, 32 anwendungsspezifisch aktiviert werden, so dass über diese Ausgangssignale übertragen werden können. An jede der Ausgangsschnittstellen 30, 31, 32 kann jeweils ein Aktor 60, 61, 62 angeschlossen werden. Diese Aktoren 60, 61, 62 können in Abhängigkeit von den über die Ausgangsschnittstellen 30, 31, 32 bereitgestellten Ausgangssignalen bestimmte Aktionen ausführen. Beispiele für derartige Aktoren 60, 61, 62 sind unter anderem Schütze, Relais, elektronische Schalter sowie optische und/oder akustische Signalvorrichtungen. Die Recheneinheit 4 ist dazu geeignet, die über die Eingangsschnittstellen 20, 21, 22 empfangenen Eingangssignale nach bestimmten Regeln, insbesondere durch logische Verknüpfungen, und gegebenenfalls weiteren Signalverarbeitungs- und/oder Datenverarbeitungsschritten auszuwerten und an den Ausgangsschnittstellen 30, 31, 32 entsprechende Ausgangssignale bereitzustellen, die an die Aktoren 60, 61, 62 weitergeleitet werden, um diese anzusteuern.

Die Recheneinheit 4 umfasst einen programmierbaren Prozessor 40, einen Festspeicher 41 sowie einen Arbeitsspeicher 42. Innerhalb des Festspeichers 41 ist ein Betriebsprogramm 5 zum Betreiben des Prozessors 40 nicht-flüchtig gespeichert. Dieses Betriebsprogramm 5, das häufig auch als Firmware bezeichnet wird, weist Programmcodemittel in maschinenlesbarer Form auf und stellt der Sicherheitssteuerungseinrichtung 1 eine Funktionsbibliothek F mit einer Anzahl n verfügbarer Funktionen F₁ bis Fₙ zur Verfügung. Diese Funktionen F₁ bis Fₙ bilden Basisfunktionen, für deren Ausführung die Sicherheitssteuerungseinrichtung 1 hardware- und softwareseitig grundsätzlich ausgelegt ist. In dem Arbeitsspeicher 42 können zum Beispiel ein Anwenderprogramm sowie Zwischengrößen, die zum Beispiel bei der Verarbeitung der Eingangssignale anfallen können, temporär gespeichert werden.

Die grundlegende Idee der vorliegenden Erfindung besteht nun darin, die Sicherheitssteuerungseinrichtung 1 anwendungsspezifisch nur mit solchen Funktionen Fi aus der Funktionsbibliothek F auszustatten, die der Anwender der Sicherheitssteuerungseinrichtung 1 tatsächlich benötigt beziehungsweise für die er vom Hersteller der Sicherheitssteuerungseinrichtung 1 entsprechende Nutzungsrechte erworben hat, die es ihm gestatten, diese Funktionen Fi zu nutzen. Beispielsweise kann die Sicherheitssteuerungseinrichtung 1 in einer ersten Basiskonfiguration, die vom Hersteller vorkonfiguriert sein kann, nur die insbesondere in einer ersten Funktionsgruppe FG1 zusammengefassten Funktionen Fi einer Eingabe- und Ausgabevorrichtung aufweisen, bei der über die Eingangsschnittstellen 20, 21, 22 des Eingangsmoduls 2 Eingangssignale empfangen werden und diese - ohne dass eine Signalverarbeitung mittels der Recheneinheit 4 erfolgt - als Ausgangssignale an den Ausgangsschnittstellen 30, 31, 32 des Ausgangsmoduls 3 ausgegeben werden.

In einer zweiten Basiskonfiguration, die vom Hersteller der Sicherheitssteuerungseinrichtung 1 ebenfalls vorkonfiguriert sein kann, kann die Sicherheitssteuerungseinrichtung 1 typische Funktionen Fi einer speicherprogrammierbaren Steuerungseinrichtung aufweisen, die herstellerseitig beispielsweise in einer zweiten Funktionsgruppe FG2 zusammengefasst sein können. Nach einer Bereitstellung entsprechender Funktionsaktivierungscodes FACi in maschinenlesbarer Form und deren logischer Verknüpfung mit den Funktionen Fi zum Zwecke der Aktivierung dieser Funktionen Fi kann die Sicherheitssteuerungseinrichtung 1 über die freigeschalteten Eingangsschnittstellen 20, 21, 22 des Eingangsmoduls 2 Eingangssignale von den Sensoren 50, 51, 52 erfassen. Die Recheneinheit 4 verarbeitet diese Eingangssignale nach bestimmten Regeln und generiert Ausgangssignale, die über die Ausgangsschnittstellen 30, 31, 32 des Ausgangsmoduls 3 ausgegeben werden und den Aktoren 60, 61, 62 zur Verfügung gestellt werden, die in Abhängigkeit von den Ausgangssignalen bestimmte Aktionen ausführen können.

In einer dritten Basiskonfiguration, die vom Hersteller der Sicherheitssteuerungseinrichtung 1 ebenfalls vorkonfiguriert sein kann und deren Funktionen Fi zu einer dritten Funktionsgruppe FG3 zusammengefasst sein können, kann die Sicherheitssteuerungseinrichtung 1 typische Funktionen zum fehlersicheren Steuern sicherheitskritischer Prozesse, insbesondere zum fehlersicheren Abschalten einer Maschine oder einer Maschinenanlagen, aufweisen. Dabei werden zum Beispiel bestimmte Funktionen bereitgestellt, die bewirken, dass der mittels der Sicherheitssteuerungseinrichtung 1 gesteuerte Prozess im Fehlerfall in einen sicheren Zustand überführt werden kann.

Die Änderung beziehungsweise Erweiterung des Funktionsumfangs der Sicherheitssteuerungseinrichtung 1 erfolgt anders als im Stand der Technik nicht durch das Aufspielen eines neuen Betriebsprogramms 5, das in dem Festspeicher 41 der Recheneinheit 4 abrufbar gespeichert ist. Vorliegend werden Funktionsaktivierungscodes FACi in maschinenlesbarer Form bereitgestellt, die mit den einzelnen Funktionen Fi der Funktionsbibliothek F logisch verknüpft werden können, um dadurch deren Freischaltung und Aktivierung zu bewirken. Dabei ist einer Funktion Fi der Funktionsbibliothek F ein definierter Funktionsaktivierungscode FACi zuordenbar. Durch die logische Verknüpfung der einzelnen Funktionsaktivierungscodes FACi mit den diesen zugeordneten Funktionen Fi der Funktionsbibliothek F ist es möglich, gezielt einzelne Funktionen Fi aus der Funktionsbibliothek F des Betriebsprogramms 5 freizuschalten, um dadurch den Funktionsumfang der Sicherheitssteuerungseinrichtung 1 zu definieren.

Die Recheneinheit 4 weist erfindungsgemäß eine Speichermittelschnittstelle 43 auf, in der ein überschreibbares, nicht-flüchtiges Speichermittel 6 aufgenommen werden kann. Dieses Speichermittel 6 kann vorzugsweise eine SD-Karte oder ein USB-Speichermittel sein. In diesem Zusammenhang ist es bevorzugt, dass die Funktionsaktivierungscodes FACi in einem kryptografisch geschützten Speicherbereich des Speichermittels 6 gespeichert sind. Auf diese Weise kann bei einem austauschbaren Speichermittel 6 verhindert werden, dass die Funktionsaktivierungscodes FACi unautorisiert kopiert oder auch manipuliert werden. Ferner wird dadurch in vorteilhafter Weise auch die Möglichkeit geschaffen, die einmal erworbenen Funktionsaktivierungscodes FACi später mit anderen dafür vorgesehenen Sicherheitssteuerungseinrichtungen 1 zu nutzen.

In einer alternativen , nicht beanspruchten Ausführungsform besteht auch die Möglichkeit, dass das überschreibbare, nicht-flüchtige Speichermittel 6 fest in die Recheneinheit 4 integriert ist. Dieses fest integrierte Speichermittel kann ebenfalls einen kryptografisch geschützten Speicherbereich aufweisen, in dem die Funktionsaktivierungscodes FACi abrufbar gespeichert sind.

In dem Speichermittel 6 ist eine Anzahl von Funktionsaktivierungscodes FACi abrufbar gespeichert. Dabei ist jedem der Funktionsaktivierungscodes FACi, die vom Anwender in einem Lizensierungsprozess erworben wurden, eine der Funktionen Fi der Funktionsbibliothek F derart zugeordnet, dass durch die logische Verknüpfung der Funktionsaktivierungscodes FACi mit den Funktionen Fi der Funktionsbibliothek F nur diejenigen Funktionen Fi aktivierbar sind, deren Funktionsaktivierungscodes FACi in dem Speichermittel 6 gespeichert sind. Die Gesamtheit der Funktionen F₁ bis Fₙ der Funktionsbibliothek F, für deren Ausführung die Sicherheitssteuerungseinrichtung 1 hardware- und softwareseitig grundsätzlich ausgelegt ist, kann zum Beispiel in Form einer Funktionstabelle in dem Festspeicher 5 hinterlegt sein. Beim Einsetzen des überschreibbaren, nicht-flüchtigen Speichermittels 6 in die dafür vorgesehene Speichermittelschnittstelle 43 können die darin gespeicherten Funktionsaktivierungscodes FACi von dem Prozessor 40 ausgelesen werden. Ferner können die zugehörigen Funktionen Fi, die mittels der bereitgestellten Funktionsaktivierungscodes FACi aktivierbar sind, aus der Funktionstabelle der Funktionsbibliothek F ausgelesen werden. Dabei werden die Funktionsaktivierungscodes FACi mit den zugehörigen Funktionen Fi logisch verknüpft und dadurch aktiviert und für die Nutzung freigeschaltet. Bei diesem Autorisierungsprozess kann zum Beispiel zumindest ein Hardwareidentifikationsdatensatz ID erzeugt werden, der anschließend in dem nicht-flüchtigen, überschreibbaren Speichermittel 6 abrufbar gespeichert wird. Auf diese Weise werden das Speichermittel 6 und die mittels der Funktionsaktivierungscodes FACi freigeschalteten Funktionen Fi eindeutig mit der Hardware der Sicherheitssteuerungseinrichtung 1 verknüpft. Dadurch kann zum Beispiel eine unautorisierte Nutzung der Funktionsaktivierungscodes FACi verhindert werden, indem diese eindeutig mit der Hardware der Sicherheitssteuerungseinrichtung 1 verknüpft werden. Die Nutzung der Sicherheitssteuerungseinrichtung 1 ist nur mittels des in dieser Weise autorisierten Speichermittels 6 möglich. Die eindeutige Zuordnung der Hardware der Sicherheitssteuerungseinrichtung 1 zu dem Speichermittel 6 mit den darin hinterlegten Funktionsaktivierungscodes FACi ist nicht zwingend erforderlich. Wenn die Funktionsaktivierungscodes FACi in einem kryptografisch geschützten Speicherbereich des Speichermittels 6 gespeichert sind, kann das Kopieren und/oder Manipulieren der Funktionsaktivierungscodes FACi wirksam verhindert werden. Bei einem austauschbaren Speichermittel 6, wie zum Beispiel einer SD-Karte oder einem USB-Speichermittel, besteht so in vorteilhafter Weise die Möglichkeit, die einmal erworbenen Funktionsaktivierungscodes FACi zu einem späteren Zeitpunkt mit anderen dafür vorgesehenen Sicherheitssteuerungseinrichtungen 1 zu nutzen.

Es ist zum Beispiel möglich, aus einer Sicherheitssteuerungseinrichtung 1 in der ersten Basiskonfiguration durch Freischalten der Funktionen der zweiten Funktionsgruppe FG2 eine Sicherheitssteuerungseinrichtung 1 in der zweiten Basiskonfiguration zu erhalten, ohne dass die Hardware der Sicherheitssteuerungseinrichtung 1 ausgetauscht werden muss und ohne dass ein neues Betriebsprogramm 5 aufgespielt werden muss. Es ist ferner möglich, aus einer Sicherheitssteuerungseinrichtung 1 in der ersten oder zweiten Basiskonfiguration durch Freischalten der Funktionen der dritten Funktionsgruppe FG3 eine Sicherheitssteuerungseinrichtung 1 in der dritten Basiskonfiguration zu erhalten, ohne dass auch hierbei die Hardware der Sicherheitssteuerungseinrichtung 1 ausgetauscht werden muss und ohne dass ein neues Betriebsprogramm 5 aufgespielt werden muss.

Selbstverständlich können auch innerhalb der drei Basiskonfigurationen der Sicherheitssteuerungseinrichtung 1 durch die Bereitstellung von Funktionsaktivierungscodes FACi ebenfalls bestimmte Funktionen Fi aus der Funktionsbibliothek F gezielt freigeschaltet und aktiviert werden, um den Funktionsumfang der Sicherheitssteuerungseinrichtung 1 anzupassen, insbesondere zu erweitern, ohne dabei ein neues Betriebsprogramm 5 aufspielen zu müssen.

Darüber hinaus besteht auch die Möglichkeit, dass die Sicherheitssteuerungseinrichtung 1 um ein oder mehrere Eingabemodule 2 und/oder um ein oder mehrere Ausgabemodule 3 erweiterbar ist, wobei zusätzliche Funktionen Fi des Eingabemoduls/der Eingabemodule und/oder des Ausgabemoduls/der Ausgabemodule in der Funktionsbibliothek F des Betriebsprogramms 5 bereits enthalten sind. Dadurch wird in vorteilhafter Weise auch die Möglichkeit einer Hardware-Skalierung der Sicherheitssteuerungseinrichtung 1 geschaffen. Da die Funktionen der zusätzlichen Eingabemodule 2 und/oder Ausgabemodule 3 bereits in die Funktionsbibliothek F des Betriebsprogramms 5 integriert sind und in der hier beschriebenen Weise aktiviert und dadurch freigeschaltet werden können, ist es in vorteilhafter Weise nicht erforderlich, bei einer Hardwareerweiterung ein ganz neues Betriebsprogramm 5 in der Sicherheitssteuerungseinrichtung 1 zu installieren, damit die zusätzlichen Funktionen genutzt werden können.

## Patentansprüche

1. Sicherheitssteuerungseinrichtung (1), umfassend
- mindestens ein Eingabemodul (2) mit einer Anzahl von Eingangsschnittstellen (20, 21, 22),
- mindestens ein Ausgabemodul (3) mit einer Anzahl von Ausgangsschnittstellen (30, 31, 32) sowie
- eine Recheneinheit (4), die an das mindestens eine Eingabemodul (2) und an das mindestens eine Ausgabemodul (3) angeschlossen ist und einen programmierbaren Prozessor (40) und einen Festspeicher (41) aufweist, wobei in dem Festspeicher (41) ein Betriebsprogramm (5) für den Prozessor (40) mit Programmcodemitteln in maschinenlesbarer Form zur Bereitstellung einer Funktionsbibliothek mit einer Anzahl n von Funktionen der Sicherheitssteuerungseinrichtung (1) nicht-flüchtig gespeichert ist,
**dadurch gekennzeichnet, dass** die Sicherheitssteuerungseinrichtung (1) ein nicht-flüchtiges, überschreibbares Speichermittel (6) aufweist, das in einer Speichermittelschnittstelle (43) der Recheneinheit (4) austauschbar aufgenommen ist, wobei in dem Speichermittel (6) eine Anzahl von Funktionsaktivierungscodes abrufbar gespeichert ist und jedem der Funktionsaktivierungscodes eine Funktion der Funktionsbibliothek derart zuordenbar ist, dass durch eine logische Verknüpfung der Funktionsaktivierungscodes mit den diesen zugeordneten Funktionen der Funktionsbibliothek nur diejenigen Funktionen der Funktionsbibliothek aktivierbar sind, deren Funktionsaktivierungscodes in dem Speichermittel (6) gespeichert sind, wobei die Funktionsbibliothek eine erste Funktionsgruppe aufweist, die der Sicherheitssteuerungseinrichtung (1) nach der Aktivierung durch die zugeordneten Funktionsaktivierungscodes in einer ersten Basiskonfiguration Funktionsumfänge für eine signalverarbeitungsfreie Signaleingabe und Signalausgabe zur Verfügung stellt, und/oder dass die Funktionsbibliothek eine zweite Funktionsgruppe aufweist, die der Sicherheitssteuerungseinrichtung (1) nach der Aktivierung durch die zugeordneten Funktionsaktivierungscodes in einer zweiten Basiskonfiguration Funktionsumfänge einer speicherprogrammierbaren Steuerungseinrichtung zur Verfügung stellt, und dass die Funktionsbibliothek eine dritte Funktionsgruppe aufweist, die der Sicherheitssteuerungseinrichtung (1) nach der Aktivierung durch die zugeordneten Funktionsaktivierungscodes in einer dritten Basiskonfiguration Funktionsumfänge einer Sicherheitssteuerungseinrichtung mit sicherheitstechnischen Steuerregeln zur Verfügung stellt.

2. Sicherheitssteuerungseinrichtung (1) nach Anspruch 1, **dadurch gekennzeichnet, dass** die Funktionsumfänge der ersten und/oder zweiten und/oder dritten Basiskonfiguration durch Überschreiben des Speichermittels (6) und Speichern zumindest teilweise von den Basiskonfigurationen verschiedenen Funktionsaktivierungscodes veränderbar, insbesondere erweiterbar, sind.

3. Sicherheitssteuerungseinrichtung (1) nach einem der Ansprüche 1 oder 2, **dadurch gekennzeichnet, dass** in dem nicht-flüchtigen, überschreibbaren Speichermittel (6) zumindest ein Hardwareidentifikationsdatensatz abrufbar gespeichert ist, der dazu eingerichtet ist, das Speichermittel (6) und die mittels der Funktionsaktivierungscodes freigeschalteten Funktionen eindeutig mit einer Hardware der Sicherheitssteuerungseinrichtung (1) zu verknüpfen.

4. Sicherheitssteuerungseinrichtung (1) nach einem der Ansprüche 1 bis 3, **dadurch gekennzeichnet, dass** die Funktionsaktivierungscodes in einem kryptografisch geschützten Speicherbereich des Speichermittels (6) gespeichert sind.

5. Sicherheitssteuerungseinrichtung (1) nach einem der Ansprüche 1 bis 4, **dadurch gekennzeichnet, dass** die Funktionen der Funktionsbibliothek in einer Funktionstabelle innerhalb des Festspeichers (41) abrufbar gespeichert sind.

6. Sicherheitssteuerungseinrichtung (1) nach einem der Ansprüche 1 bis 5, **dadurch gekennzeichnet, dass** die Sicherheitssteuerungseinrichtung (1) um ein oder mehrere Eingabemodule (2) und/oder um ein oder mehrere Ausgabemodule (3) erweiterbar ist, wobei zusätzliche Funktionen des Eingabemoduls (2)/der Eingabemodule (2) und/oder des Ausgabemoduls (3)/der Ausgabemodule (3) in der Funktionsbibliothek des Betriebsprogramms (5) enthalten sind.

7. Verfahren zur Änderung eines Funktionsumfangs einer Sicherheitssteuerungseinrichtung (1) nach einem der Ansprüche 1 bis 6, umfassend die Schritte
- Bereitstellen der Sicherheitssteuerungseinrichtung (1) mit einem Betriebsprogramm (5),
- Bereitstellen eines überschreibbaren, nicht-flüchtigen Speichermittels (6), in dem Funktionsaktivierungscodes der ersten Funktionsgruppe und/oder der zweiten Funktionsgruppe und der dritten Funktionsgruppe abrufbar gespeichert sind,
- Verknüpfen der gespeicherten Funktionsaktivierungscodes mit diesen zugeordneten Funktionen einer Funktionsbibliothek des Betriebsprogramms (5) in der Sicherheitssteuerungseinrichtung (1).

8. Verfahren nach Anspruch 7, **dadurch gekennzeichnet, dass** nach dem Verknüpfen der gespeicherten Funktionsaktivierungscodes mit den Funktionen der Funktionsbibliothek zumindest ein Hardwareidentifikationsdatensatz in dem nicht-flüchtigen Speichermittel (6) abrufbar gespeichert wird.

9. Verfahren nach einem der Ansprüche 7oder 8, **dadurch gekennzeichnet, dass** die Funktionsaktivierungscodes in einem kryptografisch geschützten Speicherbereich des Speichermittels (6) gespeichert werden.

## Claims

1. Safety control apparatus (1) comprising
- at least one input module (2) having a number of input interfaces (20, 21, 22),
- at least one output module (3) having a number of output interfaces (30, 31, 32), and
- a computing unit (4) which is connected to the at least one input module (2) and to the at least one output module (3) and has a programmable processor (40) and a read-only memory (41), wherein the read-only memory (41) stores, in a non-volatile manner, an operating program (5) for the processor (40) with program code means in machine-readable form for providing a function library having a number n of functions of the safety control apparatus (1),
**characterised in that**
the safety control apparatus (1) has a non-volatile, rewritable memory means (6) which is interchangeably accommodated in a memory means interface (43) of the computing unit (4), wherein the memory means (6) retrievably stores a number of function activation codes and a function from the function library can be associated with each of the function activation codes in such a manner that only those functions from the function library whose function activation codes are stored in the memory means (6) can be activated by logically linking the function activation codes to their associated functions from the function library, wherein the function library has a first function group which, after activation by the associated function activation codes in a first basic configuration, makes available to the safety control apparatus (1) function ranges for a signal processing-free signal input and signal output, and/or **in that** the function library has a second function group which, after activation by the associated function activation codes in a second basic configuration, makes available to the safety control apparatus (1) function ranges of a programmable logic controller, and **in that** the function library has a third function group which, after activation by the associated function activation codes in a third basic configuration, makes available to the safety control apparatus (1) function ranges of a safety control apparatus with safety-related control rules.

2. Safety control apparatus (1) according to claim 1, **characterised in that** the function ranges of the first and/or second and/or third basic configuration are changeable, in particular expandable, by rewriting the storage medium (6) and storing function activation codes that are least partially different from the basic configurations.

3. Safety control apparatus (1) according to any of claims 1 or 2, **characterised in that** the non-volatile, rewritable storage medium (6) retrievably stores at least one hardware identification data record that is configured to uniquely link the storage medium (6) and the functions unlocked by the function activation codes to hardware of the safety control apparatus (1).

4. Safety control apparatus (1) according to any of claims 1 to 3, **characterised in that** the function activation codes are stored in a cryptographically protected storage area of the storage medium (6).

5. Safety control apparatus (1) according to any of claims 1 to 4, **characterised in that** the functions from the function library are stored retrievably in a function table within the read-only memory (41).

6. Safety control apparatus (1) according to any of claims 1 to 5, **characterised in that** the safety control apparatus (1) is expandable by one or more input modules (2) and/or by one or more output modules (3), wherein additional functions of the input module (2)/the input modules (2) and/or of the output module (3)/the output modules (3) are included in the function library of the operating program (5).

7. Method for changing a function range of a safety control apparatus (1) according to any of claims 1 to 6, comprising the steps of:
- providing the safety control apparatus (1) with an operating program (5),
- providing a rewritable, non-volatile storage medium (6) which retrievably stores function activation codes of the first function group and/or the second function group and the third function group,
- linking the stored function activation codes to their associated functions from a function library of the operating program (5) in the safety control apparatus (1).

8. Method according to claim 7, **characterised in that**, after the stored function activation codes are linked to the functions from the function library, at least one hardware identification data record is retrievably stored in the rewritable, non-volatile storage medium (6).

9. Method according to any of claims 7 or 8, **characterised in that** the function activation codes are stored in a cryptographically protected storage area of the storage medium (6).

## Revendications

1. Dispositif de commande de sécurité (1) comprenant
- au moins un module d'entrée (2) avec un certain nombre d'interfaces d'entrée (20, 21, 22),
- au moins un module de sortie (3) avec un certain nombre d'interfaces de sortie (30, 31, 32), ainsi
- qu'une unité de calcul (4) qui est raccordée à l'au moins un module d'entrée (2) et à l'au moins un module de sortie (3) et qui présente un processeur programmable (40) et une mémoire morte (41), dans lequel un programme d'exploitation (5) pour le processeur (40) avec des moyens de code de programme est stocké dans la mémoire morte (41) sous une forme lisible par machine pour fournir une bibliothèque de fonctions avec un nombre n de fonctions du dispositif de commande de sécurité (1) de manière non volatile,
**caractérisé en ce que** le
dispositif de commande de sécurité (1) présente un moyen de stockage (6) non volatile réinscriptible, qui est reçu de manière interchangeable dans une interface de moyen de stockage (43) de l'unité de calcul (4), dans lequel un certain nombre de codes d'activation de fonction est stocké dans le moyen de stockage (6) de manière à pouvoir être appelés et chacun des codes d'activation de fonction peut être affecté à une fonction de la bibliothèque de fonctions, **en ce que** seules les fonctions de la bibliothèque de fonctions dont les codes d'activation de fonctions sont stockés dans le moyen de stockage (6) peuvent être activées par une liaison logique des codes d'activation de fonctions avec les fonctions de la bibliothèque de fonctions qui leur sont affectées, dans lequel la bibliothèque de fonctions présente un premier groupe de fonctions qui, après l'activation par les codes d'activation de fonction affectés, met à disposition du dispositif de commande de sécurité (1), dans une première configuration de base, des plages de fonctions pour une entrée de signal et une sortie de signal sans traitement de signal, et/ou **en ce que** la bibliothèque de fonctions présente un deuxième groupe de fonctions qui, après activation par les codes d'activation de fonction attribués, met à la disposition du dispositif de commande de sécurité (1), dans une deuxième configuration de base, des plages de fonctions d'un dispositif de commande à mémoire programmable, et **en ce que** la bibliothèque de fonctions présente un troisième groupe de fonctions qui, après l'activation par les codes d'activation de fonctions affectés dans une troisième configuration de base, met à disposition du dispositif de commande de sécurité (1) des plages de fonctions d'un dispositif de commande de sécurité avec des règles de commande relatives à la sécurité.

2. Dispositif de commande de sécurité (1) selon la revendication 1, **caractérisé en ce que** les plages de fonctions de la première et/ou de la deuxième et/ou de la troisième configuration de base peuvent être modifiées, en particulier étendues, en réinscrivant le moyen de stockage (6) et en stockant des codes d'activation de fonctions qui sont au moins partiellement différents des configurations de base.

3. Dispositif de commande de sécurité (1) selon l'une quelconque des revendications 1 ou 2, **caractérisé en ce qu'**au moins un jeu de données d'identification du matériel est stocké dans le moyen de stockage non volatile et réinscriptible (6) de manière récupérable, qui est configuré pour lier de manière unique le moyen de stockage (6) et les fonctions activées au moyen des codes d'activation de fonction avec un dispositif de commande de sécurité (1).

4. Dispositif de commande de sécurité (1) selon l'une quelconque des revendications 1 à 3, **caractérisé en ce que** les codes d'activation de fonction sont stockés dans une zone de stockage cryptographiquement protégée du moyen de stockage (6).

5. Dispositif de commande de sécurité (1) selon l'une quelconque des revendications 1 à 4, **caractérisé en ce que** les fonctions de la bibliothèque de fonctions sont stockées dans une table de fonctions au sein de la mémoire morte (41) de manière récupérable.

6. Dispositif de commande de sécurité (1) selon l'une quelconque des revendications 1 à 5, **caractérisé en ce que** le dispositif de commande de sécurité (1) est extensible par un ou plusieurs modules d'entrée (2) et/ou par un ou plusieurs modules de sortie (3), dans lequel des fonctions supplémentaires du module d'entrée (2)/des modules d'entrée (2) et/ou du module de sortie (3)/des modules de sortie (3) sont contenues dans la bibliothèque de fonctions du programme d'exploitation (5).

7. Procédé de modification d'une plage fonctionnelle d'un dispositif de commande de sécurité (1) selon l'une quelconque des revendications 1 à 6, comprenant les étapes
- de fourniture au dispositif de commande de sécurité (1) d'un programme d'exploitation (5),
- de fourniture d'un moyen de stockage non volatile réinscriptible (6), dans lequel des codes d'activation de fonction du premier groupe de fonctions et/ou du deuxième groupe de fonctions et du troisième groupe de fonctions sont stockés de manière récupérable,
- de liaison des codes d'activation de fonction stockés à ces fonctions affectées d'une bibliothèque de fonctions du programme d'exploitation (5) dans le dispositif de commande de sécurité (1).

8. Procédé selon la revendication 7, **caractérisé en ce qu'**après la liaison des codes d'activation de fonction stockés aux fonctions de la bibliothèque de fonctions, au moins un jeu de données d'identification du matériel est stocké dans le moyen de stockage non volatile (6) de manière récupérable.

9. Procédé selon l'une quelconque des revendications 7 ou 8, **caractérisé en ce que** les codes d'activation de fonction sont stockés dans une zone de stockage cryptographiquement protégée du moyen de stockage (6).
